# EUROPÄISCHE PATENTSCHRIFT

(11) **EP 1 290 762 B1**
(45) Veröffentlichungstag und Bekanntmachung des Hinweises auf die Patenterteilung: **13.02.2008**
(21) Anmeldenummer: 01957810.3
(22) Anmeldetag: 30.05.2001
(51) Int. Cl.: H01R 29/00

(54) **VERTEILERANSCHLUSSMODUL FÜR DIE TELEKOMMUNIKATIONS- UND DATENTECHNIK**
DISTRIBUTOR MODULE FOR USE IN TELECOMMUNICATIONS AND DATA SYSTEMS TECHNOLOGY
MODULE DISTRIBUTEUR A CONNEXIONS UTILISE EN TELECOMMUNICATIONS ET DANS DES SYSTEMES DE DONNEES

(30) Priorität: 15.06.2000 DE 10029649
(43) Veröffentlichungstag der Anmeldung: 12.03.2003
(73) Patentinhaber: ADC GMBH, 14167 Berlin (DE)
(72) Erfinder: BUSSE, Ralf-Dieter, 12625 Waldesruh (DE); KLEIN, Harald, 10318 Berlin (DE); STARK, Joachim, 13593 Berlin (DE)
(86) Internationale Anmeldenummer: PCT/EP2001/006134
(87) Internationale Veröffentlichungsnummer: WO 2001/097339

(56) Entgegenhaltungen:
- EP-A- 0 621 660
- EP-A- 0 623 978
- EP-A- 0 645 842
- WO-A-99/36987
- US-A- 4 477 134
- US-A- 5 538 435
- US-A- 5 673 480
- US-A- 6 074 256

## Beschreibung

Die Erfindung betrifft ein Verteileranschlußmodul für die Telekommunikations- und Datentechnik, umfassend ein Gehäuse, in dem von außen zugänglich Eingangs- und Ausgangskontakte zum Anschließen von Leitungen oder Adern angeordnet sind sowie ein Herstellungsverfahren für die Verteileranschlußmodule.

Ein solches Verteileranschlußmodul ist beispielsweise aus der DE 27 25 551 bekannt. Das Verteileranschlußmodul umfaßt eine erste Reihe von Anschlußkontakten auf der Kabelseite und gegenüberliegend eine zweite Reihe von Anschlußkontakten auf der Rangierseite, wobei die Kontakte auf der Kabelseite als Eingangs- und die Kontakte auf der Rangierseite als Ausgangskontakte betrachtet werden können, auch wenn der Informationsfluß umgekehrt sein kann. Zwischen den Reihen sind Mittelkontakte angeordnet, in die Prüf- oder Schutzstecker einsteckbar sind. Ein Beispiel für derartige Schutzstecker sind 3- bzw. 5-punktige Überspannungsschutzmodule oder Staffelschutzschaltungen. Wird nun ein derartiger Überspannungsschutz in die Mittelkontakte gesteckt, so ist dieser Mittelabgriff und zum Teil auch benachbarte Mittelabgriffe Prüf- und Testzwecken nicht mehr zugänglich bzw. für die Test- und Prüfzwecke muß der Überspannungscshutz wieder entfernt werden, so daß in dieser Zeit die Kontakte nicht abgesichert sind.

Des weiteren sind beispielsweise aus der DE 3917 270 Verteileranschlußmodule bekannt, bei denen Fuktionselemente wie Staffelschutz-Schaltungen seitlich oder von unten in das Verteileranschlußmodul steckbar sind. Nachteilig ist dabei, daß die Verteileranschlußmodule entsprechend aufwendig gefertigt werden müssen.

Gemeinsam ist allen Verteileranschlußmodulen, daß die externen Funktionselemente in federnde Kontakte eingesteckt werden müssen, an die hohe Anforderungen hinsichtlich Spannungsfestigkeit und Stromtragfähigkeit zu stellen sind. Ein weiterer Nachteil ist, dass die externen Funktionselemente bei kompakten modularen Aufbauten störend sind.

Aus der WO-A-9936 987 ist ein Verteileranschlussmodul für die Telekommunikations- und Datentechnik bekannt, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem Funktionselemente zwischen den Eingangs- und Ausgangskontakten angeordnet sind, die in dem Gehäuse abgestützt ist, und die Eingangskontakte als Schneidklemmkontakte ausgebildet sind oder Schneidklemmkontakte umfassen.

Aus der EP 0 645 842 A2 ist ein Verteileranschlussmodul bekannt, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem Funktionselemente zwischen den Eingangs- und Ausgangskontakten angeordnet sind, wobei die Eingangskontakte als Schneidklemmkontakte ausgebildet sind.

Der Erfindung liegt daher das technische Problem zugrunde, ein Verteileranschlussmodul für die Telekommunikations- und Datentechnik zu schaffen, mittels dessen eine einfachere und kompaktere Bauweise möglich ist. Ein weiteres technisches Problem besteht in der zur Verfügungstellung eines Herstellungsverfahrens.

Die Lösung des technischen Problems ergibt sich durch die Gegenstände mit den Merkmalen der Patentansprüche 1 und 14. Weitere vorteilhafte Ausgestaltungen der Erfindung ergeben sich aus den Unteransprüchen.

Hierzu ist das Gehäuse des Verteileranschlussmoduls mit einem Hohlraum ausgebildet, in dem Funktionselemente zwischen den Eingangs- und Ausgangskontakten angeordnet sind. Dadurch ergibt sich die Möglichkeit einer sehr kompakten Bauweise. Das Gehäuse kann dabei prinzipiell ein- oder mehrteilig ausgebildet sein.

Dabei werden die Funktionselemente auf einer Leiterplatte angeordnet, die in dem Gehäuse abgestützt ist. Hierzu wird das Gehäuse vorzugsweise mehrteilig ausgebildet, so dass die Leiterplatte in ein erstes Gehäuseteil einschiebbar ist und anschließend durch ein zweites Gehäuseteil verschließbar ist. Je nach Anwendungsfall können so sehr leicht unterschiedlich bestückte Leiterplatten verwendet bzw. defekte Leiterplatten ausgetauscht werden.

Weiter sind die Eingangskontakte als Schneidklemmkontakte ausgebildet, so dass die Adern bzw. Leitungen auf der Kabelseite mit den bekannten Techniken schnell, sicher und flexibel anschließbar sind.

Dabei sind die Schneidklemmkontakte jeweils mit einem gabelförmigen Kontakt ausgebildet, mittels dessen eine kraftschlüssige elektrische Verbindung zu auf der Leiterplatte angeordnete Kontaktpads hergestellt wird, die vorzugsweise beidseitig auf Ober- und Unterseite angeordnet sind. Diese kraftschlüssigen Verbindungen sind erheblich toleranter gegenüber Fertigungs- und Montagetoleranzen als Lotverbindungen. Dadurch können durch Aufrasten der gabelförmigen Kontakte auf die Kontaktpads alle Schneidklemmkontakte simultan kontaktiert werden. Des Weiteren erlaubt diese Kontaktierung eine einfache Demontage, falls beispielsweise eine defekte Leiterplatte ausgewechselt werden muss.

Die Ausgangskontakte sind je nach Anwendungsfall vorzugsweise ebenfalls als Schneidklemmkontakte oder als Steckverbinder ausgebildet. Der Vorteil der Steckverbinder ist, dass falls vorkonfektionierte Kabel existieren, die Verkabelung sehr schnell und sicher durch einfaches Stecken realisiert wird. In Fällen, wo keine vorkonfektionierten Kabel existieren, greifen hingegen die Vorteile der Schneidklemmkontakte.

Die Funktionselemente können Filterschaltungen, Signalisierungen oder Prüfschaltungen sein. In einer bevorzugten Ausführungsform ist das Funktionselement ein Überspannungsschutzmodul, insbesondere ein Staffelschutz. Somit ergibt sich ein integrierter Überspannungsschutz, der weder ein nachträgliches Rangieren, Prüfen oder Testen behindert, noch beim Zusammenbau von Modulbaugruppen störend ist.

In einer weiteren bevorzugten Ausführungsform ist jeweils einem Eingangs- und Ausgangskontakt ein Trennkontakt zugeordnet, der von außen zugänglich ist. Der Trennkontakt ist jeweils in Reihe hinter den Funktionselementen angeordnet. Bei einer Ausbildung der Funktionselemente als Überspannungsschutz ist somit der Trennkontakt voll abgesichert.

Bei einer Anordnung der Funktionselemente auf einer Leiterplatte werden die Trennkontakte vorzugsweise auf der Unterseite der Leiterplatte angeordnet, wobei die Trennkontakte vorzugsweise von der gleiche Seite wie die Eingangskontakte zugänglich sind.

In einer weiteren bevorzugten Ausführungsform sind die Ausgangskontakte auf der den Eingangskontakten gegenüberliegenden Seite des Gehäuses angeordnet. Dadurch wird eine klare Trennung zwischen der Kabel- und der Rangierseite erreicht, wobei sich die einzelnen Adern bzw. Kabel nicht stören.

Werden die Eingangs- und oder Ausgangskontakte als Schneidklemmkontakte ausgebildet, so werden diese derart zueinander dimensioniert, daß auf die vorhandenen Standard-Anschlußwerkzeuge zugegriffen werden kann. Dies erspart die Entwicklung neuer und kostspieliger Anschlußwerkzeuge und vereinfacht die Handhabung des neuen Verteileranschlußmoduls in Kombination mit bereits vorhandenen Verteileranschlußmodulen.

In einer weiteren bevorzugten Ausführungsform werden die Masseleitungen auf der Leiterplatte durch einen gabel- bzw. ringförmigen Kontakt nach außen zugänglich ausgebildet. Hierzu werden die Masseleitungen vorzugsweise auf der Leiterplatte zusammengefaßt. Über entsprechende Bohrungen bzw.
Öffnungen kann dann das Verteileranschlußmodul auf Profilstangen aufgeschoben werden, die dann mit dem gabel- bzw. ringförmigen Kontakt verbunden sind.

In einer weiteren bevorzugten Ausführungsform werden die Masseleitungen von der Seite der Eingangskontakte aus zugänglich ausgestaltet. Dadurch kann das Verteileranschlußmodul wahlweise als AB- oder als ABS-Modul genutzt werden, wobei die Schirmungen mit den Masseleitungen verbunden werden.

Zur Herstellung des erfindungsgemäßen Verteileranschlußmoduls wird die Leiterplatte mit den Funktionselementen in ein erstes Gehäuseteil eingeschoben und ein zweites, die Eingangskontakte tragendes Gehäuseteil aufgerastet. Der Vorteil dieses Verfahrens ist, daß die Bestückung und Verrastung einfach automatisierbar ist. Bei Ausführungsformen mit Trennkontakten gibt es prinzipiell verschiedene Varianten.

In einer ersten bevorzugten Ausführungsform werden die Trennkontakte zunächst an der Leiterplatte befestigt, wo die Trennkontakte entsprechend eingespannt werden. Anschließend wird die Leiterplatte mit den eingespannten Trennkontakten in das erste Gehäuseteil geschoben, das dann mit dem zweiten Gehäuseteil verrastet wird. Dadurch sind keine Vorhaltungen an dem Gehäuse notwendig, die dessen Stabilität beeinträchtigen.

In einer alternativen Ausführungsform wird zunächst die Leiterplatte in das erste Gehäuseteil geschoben und anschließend die Trennkontakte von der Unterseite des Gehäuses an der Leiterplatte befestigt und eingespannt. Dadurch ist eine sehr einfache Nachrüstung der Verteileranschlußmodule mit Trennkontakten möglich.

Die Erfindung wird nachfolgend anhand eines bevorzugten Ausführungsbeispieles näher erläutert. Die Fig. zeigen:
- Fig. 1: einen Querschnitt durch ein Verteileranschlußmodul,
- Fig. 2: eine Frontansicht eines Verteileranschlußmoduls,
- Fig. 3: einen schematische Schaltungsanordnung eines Verteileranschlußmoduls mit Staffelschutz,
- Fig. 4: einen schematischen Verfahrensablauf zur Herstellung eines Verteileranschlußmoduls,
- Fig. 5: einen schematischen Verfahrensablauf eines alternativen Verfahrens zur Herstellung eines Verteileranschlußmoduls,
- Fig. 6: ein Blockschaltbild eines Verteileranschlußmoduls mit einem ADSL-Splitter und
- Fig. 7: eine Explosionsdarstellung eines Verteileranschlußmoduls.

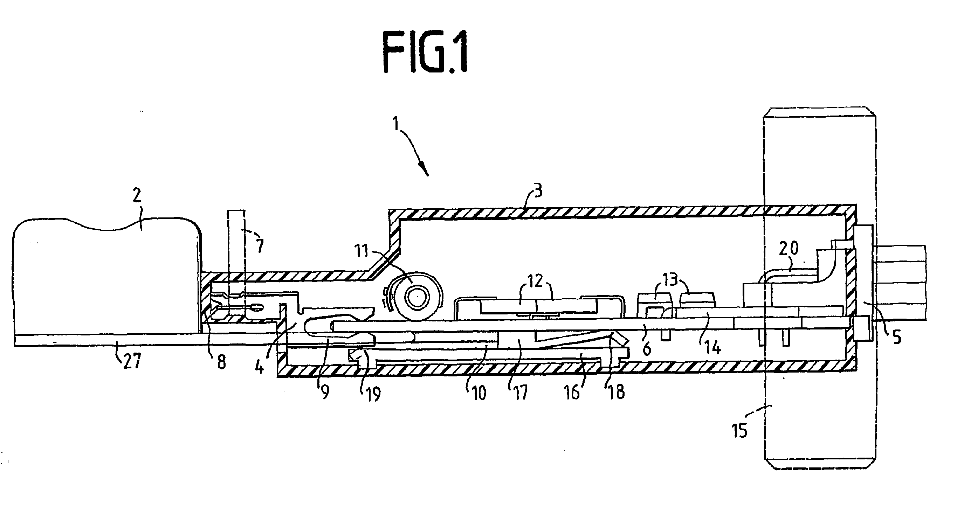

In der Fig. 1 ist das Verteileranschlußmodul 1 mit einem gesteckten Prüfstecker 2 im Querschnitt dargestellt. Das Verteileranschlußmodul 1 umfaßt ein Gehäuse 3, Eingangskontakte 4, Ausgangskontakte 5 und eine im Hohlraum des Gehäuses 3 angeordnete Leiterplatte 6. Die Eingangskontakte 4 sind als Schneidklemmkontakte zur Kontaktierung von Adern 7 ausgebildet, die von einer ersten Stirnseite 8 des Gehäuses 3 aus zugänglich sind. Auf der der Leiterplatte 6 zugewandten Seite sind die Eingangskontakte 4 mit gabelförmigen Kontakten 9 ausgebildet. Die gabelförmigen Kontakte 9 umgreifen die Leiterplatte 6 und bilden eine kraftschlüssige Verbindung mit auf der Ober- und Unterseite der Leiterplatte 6 angeordneten Kontaktpads. Auf der Leiterplatte 6 sind Staffelschutzschaltungen angeordnet, die zwischen den Eingangskontakten 4 und den Ausgangskontakten 5 liegen. Dabei ist jeweils ein Staffelschutz zwei Eingangskontakten 4 und zwei Ausgangskontakten 5 zugeordnet. Der Staffelschutz umfaßt einen Überspannungsableiter 11, zwei PTC-Widerstände 12 und zwei Dioden 13, deren Masseleitungen über einen gabel- bzw. ringförmigen Kontakt 14 mit einer durch das Gehäuse 3 geführten Profilstange 15 verbunden sind. Hinter dem Staffelschutz liegt der Trennkontakt 10, der auf der Unterseite der Leiterplatte 6 angeordnet ist, wobei zur elektrischen Verbindung von Staffelschutz und Trennkontakt 10 die Leiterplatte 6 beispielsweise bei den Dioden 13 durchkontaktiert ist. Der Trennkontakt 10 liegt auf einem Träger 16 auf, der in dem Gehäuse 3 fixiert ist. Über eine Einspannung 17 ist der Trennkontakt federnd vorgespannt, so daß die gekröpften Kontakte 18, 19 die Leiterplatte 6 kontaktieren. Hinter dem Kontakt 19 besteht eine elektrische Verbindung zu den Ausgangskontakten 5, die über eine Löt-, Preß- oder Steckverbindung 20 mit der Leiterplatte 6 verbunden sind. Ohne Prüfstecker 2 sind somit die Eingangskontakte 4 über den Staffelschutz und den nachgeordneten Trennkontakt 10 mit den Ausgangskontakten 5 verbunden. Für Prüfzwecke kann dann ein Prüfstecker 2 mit einer Platte 27 von der Stirnseite 8 in das Gehäuse 3 eingeschoben werden. Dadurch wir der Kontakt 19 des Trennkontaktes 10 von der Leiterplatte 6, wie dargestellt, weggedrückt und die elektrische Verbindung zwischen den Eingangs- und Ausgangskontakten 4, 5 wird entweder aufgetrennt oder erfolgt über den Prüfstecker 2. Da der Trennkontakt 10 hinter dem Staffelschutz angeordnet ist, bleibt der Trennkontakt 10 auch bei Prüfhandlungen mit dem Prüfstecker 2 voll gegen Überspannung abgesichert. Da beim Beschalten der Schneid-Klemm-Kontakte große Kräfte auftreten können, kann zusätzlich im Bereich der gabelförmigen Kontakte 9 über die volle Breite der Leiterplatte 6 ein kunststoffförmiges Halte- bzw. Stützelement auf die Leiterplatte 6 aufgerastet werden, was die gabelförmigen Kontakte 9 auf der Leiterplatte 6 fixiert.

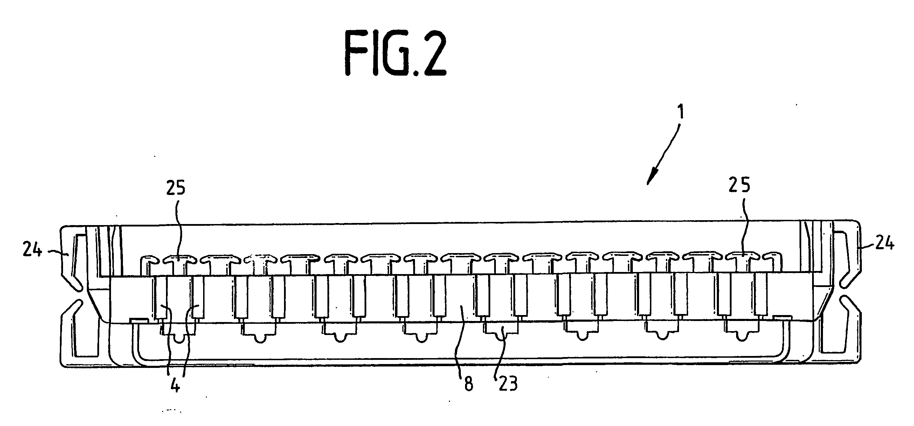

In der Fig.2 ist das Verteileranschlußmodul 1 in einer Frontansicht der Stirnseite 8 dargestellt. Das Verteileranschlußmodul 1 umfaßt 16 Eingangskontakte 4, die paarweise zusammengefaßt sind und beispielsweise zum Anschließen von Doppeladern dienen. Unter jeweils einem Paar Eingangskontakte 4 ist ein Zugang 23 für einen Prüfstecker 21 angeordnet. Über diesen Zugang 23 sind die Trennkontakte von außen zugänglich. Durch Einführen eines Prüfsteckers 21 in den Zugang 23 werden dabei die beiden Trennkontakte der zwei Eingangskontakte 4 gleichzeitig bedient. Des weiteren umfaßt das Gehäuse 3 Kabelführungen 24 und Zugentlastungen 25.

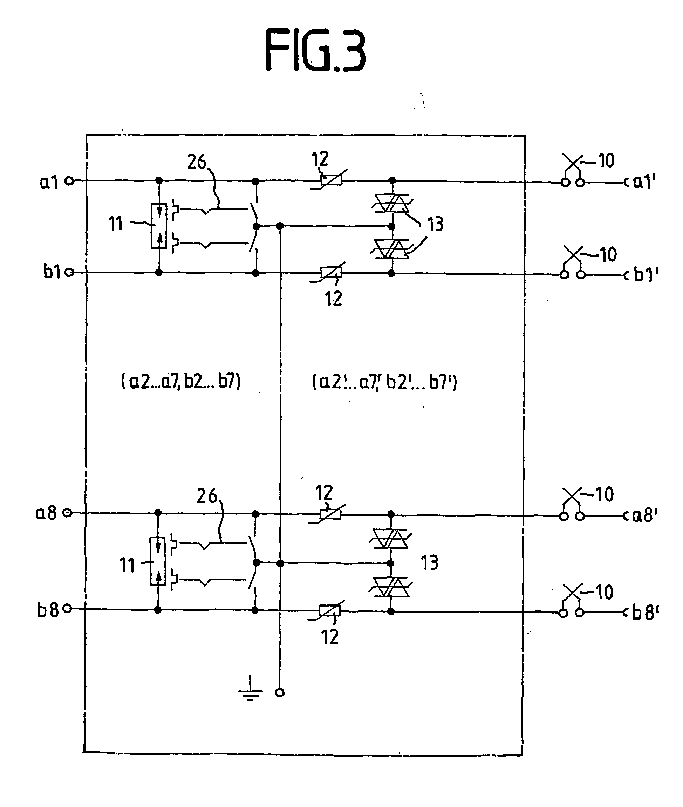

In der Fig.3 ist schematsch die Schaltungsanordnung für ein Verteileranschlußmodul mit Staffelschutz als Funktionselemente dargestellt. Die Schaltung umfaßt 16 Eingangskontakte a1, b1-a8,b8 und 16 Ausgangskontakte a1', b1'-a8', b8', wobei jeweils ein a,b-Paar zur Beschaltung einer Doppelader dient. Die Eingangs- und Ausgangskontakte a, b bzw. a', b' entsprechen dabei den Eingangs- und Ausgangskontakten 4, 5 aus Fig.1. Dabei ist jeweils zwei Eingangskontakten ein Staffelschutz zugeordnet. Wie bereits in Fig.1 beschrieben umfaßt jeder Staffelschutz einen dreipoligen Überspannungsableiter 11, zwei PTC-Widerstände 12 und zwei Dioden 13. Jedem Überspannungsableiter 11 ist ein Fail-Safe-Kontakt 26 mit mindestens einem Schmelzelement zugeordnet, der bei Auftreten einer Überspannung die beiden Eingangskontakte permanent gegen Masse kurzschließt. Zwischen dem Staffelschutz und den beiden zugeordneten Ausgangskontakten sind die beiden Trennkontakte 10 angeordnet.

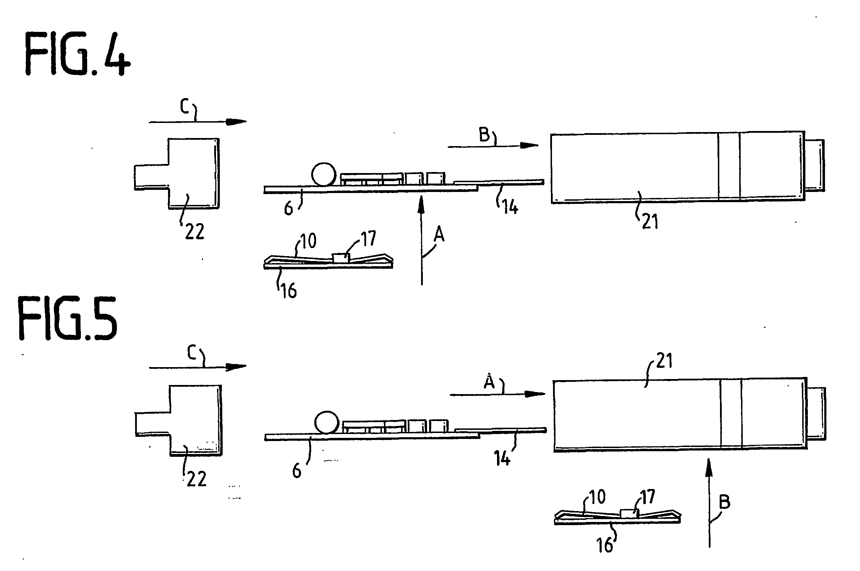

In Fig. 4 ist schematisch ein Herstellungsverfahren für ein Verteileranschlußmodul 1 gemäß Fig. 1 dargestellt. In einem ersten Verfahrensschritt A werden die Trennkontakte 10 mit ihren Einspannungen 17 auf einem gemeinsamen oder separaten Trägern 16 an der Unterseite der Leiterplatte 6 befestigt. Anschließend wird in einem Verfahrenschritt B die vollbestückte Leiterplatte 6 in den Hohlraum eines ersten Gehäuseteils 21 eingeschoben. Anschließend wird in einem weiteren Verfahrenschritt C ein zweites Gehäuseteil 22, in dem die Eingangskontakte 4 angeordnet sind, auf das erste Gehäuseteil 21 aufgerastet.

In der Fig. 5 ist schematisch ein alternatives Herstellungsverfahren dargestellt. Dabei wird zunächst in einem ersten Verfahrenschritt A die vollbestückte Leiterplatte 6 in das erste Gehäuseteil 21 geschoben und anschließend in einem Verfahrenschritt B die Trennkontakte 10 von der Unterseite des ersten Gehäuseteils 21 eingesteckt. Anschließend wird wieder das zweite Gehäuseteil 22 in dem Verfahrensschritt C auf des erste Gehäuseteil 21 aufgerastet.

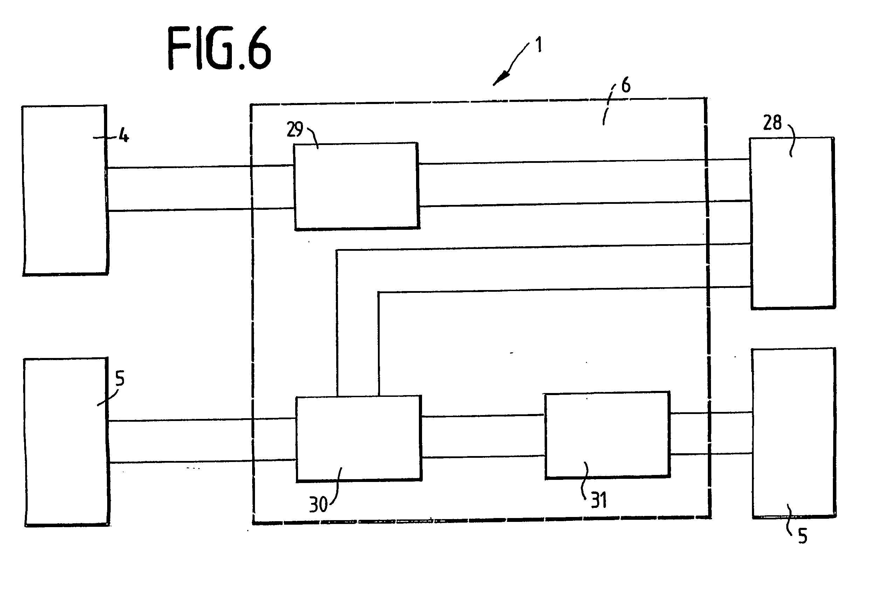

In der Fig. 6 ist ein Blockschaltbild eines Verteileranschlußmoduls 1 mit einem ADSL-Splitter als Funktionsgruppe dargestellt, wobei ADSL für Asymmetric Digital Subscriber Line steht. ADSL ist eine Übertragungstechnologie zur Realisierung breitbandiger Datenabschlüsse über das herkömmliche Kupferkabel-Anschlußnetz. ADSL-Systeme sind ausnahmslos als bidirektionale Übertragungen mit beiden Verkehrsrichtungen (downstream und upstream) ausgeführt. Der Downstream-Kanal in Richtung Benutzer ist breitbandig ausgelegt, wohingegen der entgegengesetzte Upstream-Kanal relativ schmalbandig und in erster Linie für die Übertragung von Steuernachrichten vorgesehen ist. Anwendungsbeispiele für ADSL sind insbesondere Video on Demand und multimediale Internet-Anwendungen. Das Verteileranschlußmodul 1 umfaßt Eingangskontakte 4, Ausgangskontakte 5 und Testzugänge 28. Des weiteren umfaßt das Verteileranschußmodul 1 mindestens eine Leiterplatte 6, auf der ein Überspannungsschutz 29, ein Tiefpaßfilter 30 und ein Blockkondensator 31 angeordnet sind. Der ADSL-Splitter wird durch den Tiefpaßfilter 30 und den Blockkondensator 31 gebildet und trennt das hochfrequente ADSL-Signal, das am rechten Ausgang 5 anliegt, von einem niederfrequenten POTS- oder ISDN-Signal, was am linken Ausgang 5 anliegt, wohingegen der Eingang 4 den Teilnehmerzugang darstellt. Zur Klarstellung sei angemerkt, daß aufgrund der bidirektionalen Übertragung Signale vom Eingang 4 zum Ausgang 5 und umgekehrt übertragen werden, so daß die Begriffe 'Eingang' und 'Ausgang' sich auf die unterschiedlichen nachrichtentechnischen Anschlußseiten am Verteileranschlußmodul beziehen. Der Blockkondensator 31 dient zur Abblockung der Gleichspannungsbetriebsspannung vom ADSL-Port. Bei Anwendungen, wo diese Funktion bereits im DSLAM (Digital Subscriber Line Access Multiplexer) realisiert ist, kann der Blockkondensator 31 entfallen. Der Tiefpaßfilter 30 ist vorzugsweise hinsichtlich seiner Filtercharakteristik auf die bei der DTAG verwendeten ADSL-Systme abgestimmt, die nur den Frequenzbereich 138 kHz verwenden und so auch zu ISDN kompatibel sind. Andere Ausführungen mit besonderer Optimierung auf einzelne Dienste sind prinzipiell realisierbar. Der optionale Überspannungsschutz 29 dient zum Schutz gegen transiente Überspannungen, der die Spannungsfestigkeit der Baugruppe gegen impulsförmige Störungen auf beispielsweise 4 kV erhöht. Mittels der Testzugänge 28, die vorzugsweise als Steckverbinder, insbesondere SUB-D-Steckverbinder ausgebildet sind, wird das Signal der Teilnehmerleitung permanent zu einem externen Umschalt- und Meßequipment hin- und wieder zurückgeführt. Der Betrieb des Splitters ohne diese externe Schleife wird durch das Stecken eines entsprechenden Kurzschlußsteckers möglich. Die Haupteinsatzart des ADSL-Splitters ist der Hauptverteiler.

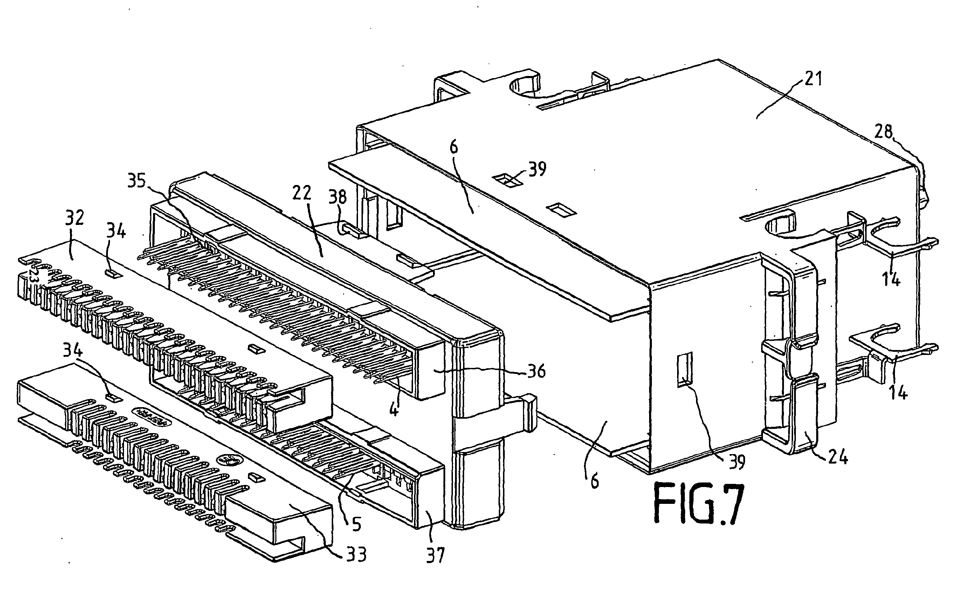

In der Fig. 7 ist das Verteileranschlußmodul 1 gemäß Fig. 6 in einer Explosionsdarstellung gezeigt. Das Verteileranschlußmodul 1 umfaßt ein erstes Gehäuseteil 21 und ein zweites Gehäuseteil 22. Das zweite Gehäuseteil 22 umfaßt eine Reihe von Eingangskontakten 4 und Ausgangskontakten 5, die jeweils als Schneid-Klemm-Kontakte ausgebildet sind. Die Eingangskontakte 4 und die Ausgangskontakte 5 sind jeweils in Anschlußleisten angeordnet, deren Gehäuseoberteile 32 bzw. 33 über die Scheid-Klemm-Kontakte aufgerastet werden. Die Gehäuseoberteile 32, 33 sind jeweils mit Rastelementen 34 ausgebildet, die in entsprechende Rastmulden 35 der Gehäuseunterteile 36, 37 der Anschlußleisten eingreifen. Die Anschlußleiste ist vorzugsweise als ABS-Leiste ausgebildet, so daß auch eine den Doppeladern zugehörige Schirmung mit angeschlossen werden kann, was die Nebensprechdämpfung der mit ADSL-Signal behafteten Teilnehmerleitungen verbessert. Die Ausgangskontakte 5 bilden die Ports für die POTS/ISDN-Leitungen. Das zweite Gehäuseteil 22 weist darüber hinaus Rastmittel 38 auf, die zu entsprechenden Rastmulden 39 des ersten Gehäuseteils 21 korrespondieren. In dem ersten Gehäuseteil 21 sind zwei Leiterplatten 6 angeordnet, die mit den Eingangskontakten 4 und Ausgangskontakten 5 elektrisch verbunden sind. Auf der Rückseite des ersten Gehäuseteils 21 sind die Testzugänge 28 und die weiteren Ausgangskontakte 5 für den ADSL-Port angeordnet, die vorzugsweise jeweils als SUB-D-Steckverbinder ausgebildet sind. An den Seitenwänden ist das erste Gehäuseteil 21 mit Kabelführungen 24 und zwei ringförmigen Kontakten 14 ausgebildet, über die die Masseleitungen der Leiterplatte 6 mit einer als Erdschiene dienenden Profilstange verbunden werden.

### Bezugszeichenliste

1) Verteileranschlußmodul
2) Prüfstecker
3) Gehäuse
4) Eingangskontakt
5) Ausgangskontakt
6) Leiterplatte
7) Adern
8) Stirnseite
9) gabelförmiger Kontakt
10) Trennkontakt
11) Überspannungsableiter
12) PTC-Widerstand
13) Diode
14) ringförmiger Kontakt
15) Profilstange
16) Träger
17) Einspannung
18) gekröpfter Kontakt
19) gekröpfter Kontakt
20) Steckverbindung .
21) Platte
21) erstes Gehäuseteil
22) zweites Gehäuseteil
23) Zugang
24) Kabelführung
25) Zugentlastung
26) Fail-Safe-Kontakt
27) Platte
28) Testzugang
29) Überspannungsschutz
30) Tiefpaßfilter
31) Blockkondensator
32,33) Gehäuseoberteil
34) Rastelement
35) Rastmulde
36, 37) Gehäuseunterteil
38) Rastmittel
39) Rastmulde

## Patentansprüche

1. Verteileranschlussmodul für die Telekommunikations- und Datentechnik, umfassend ein Gehäuse, in dem von außen zugänglich Eingangs- und Ausgangskontakte zum Anschließen von Leitungen oder Adern angeordnet sind, wobei
das Gehäuse(3) mit einem Hohlraum ausgebildet ist, in dem Funktionselemente zwischen den Eingangs- und Ausgangskontakten (4, 5) angeordnet sind, wobei
die Funktionselemente auf mindestens einer Leiterplatte (6) angeordnet sind, die in dem Gehäuse (3) abgestützt ist, und
die Eingangskontakte (4)
Schneidklemmkontakte umfassen,
**dadurch gekennzeichnet, dass**
die Schneidklemmkontakte jeweils mit einem gabelförmigen Kontakt (9) ausgebildet sind, mittels dessen eine kraftschlüssige elektrische Verbindung zu auf der Leiterplatte (6) angeordnete elektrische Kontaktpads hergestellt wird.

2. Verteileranschlussmodul nach einem der vorangegangenen Ansprüche, **dadurch gekennzeichnet, dass** die Ausgangskontakte (5) als Schneidklemmkontakte oder als elektrischer Steckverbinder ausgebildet sind.

3. Verteileranschlussmodul nach einem der vorangegangenen Ansprüche, **dadurch gekennzeichnet, dass** die Funktionselemente als Überspannungsschutz, insbesondere als Staffelschutzschaltung, ausgebildet sind.

4. Verteileranschlussmodul nach einem der vorangegangenen Ansprüche, **dadurch gekennzeichnet, dass** zwischen einem Eingangs- und Ausgangskontakt (4, 5) jeweils ein Trennkontakt (10) angeordnet ist, der von außen zugänglich ist.

5. Verteileranschlussmodul nach Anspruch 4, **dadurch gekennzeichnet, dass** der Trennkontakt (10) in Reihe zu den Funktionselementen angeordnet ist.

6. Verteileranschlussmodul nach Anspruch 5, **dadurch gekennzeichnet, dass** der Trennkontakt (10) hinter den Funktionselementen angeordnet ist.

7. Verteileranschlussmodul nach einem der Ansprüche 4 bis 6, **dadurch gekennzeichnet, dass** der Trennkontakt (10) auf der Unterseite der Leiterplatte (6) angeordnet ist.

8. Verteileranschlussmodul nach Anspruch 7, **dadurch gekennzeichnet, dass** der Trennkontakt (10) von der Seite der Eingangskontakte (4) zugänglich ist.

9. Verteileranschlussmodul nach einem der vorangegangenen Ansprüche, **dadurch gekennzeichnet, dass** die Eingangskontakte (4) und Ausgangskontakte (5) an gegenüberliegenden Stirnseiten des Gehäuses (3) angeordnet sind.

10. Verteileranschlussmodul nach einem der vorangegangenen Ansprüche, **dadurch gekennzeichnet, dass** die Abstände der Schneidklemmkontaktelemente derart zueinander dimensioniert sind, dass die Adern (7) mit Standard-Anschaltwerkzeugen anschließbar sind.

11. Verteileranschlussmodul nach einem der vorangegangenen Ansprüche, **dadurch gekennzeichnet, dass** die Masseleitungen auf der Leiterplatte (6) durch mindestens einen ring- oder gabelförmigen Kontakt (14) nach außen zugänglich ausgebildet sind.

12. Verteileranschlussmodul nach Anspruch 11, **dadurch gekennzeichnet, dass** im Bereich des gabelförmigen Kontaktes (14) das Gehäuse (3) mit Schnappelementen ausgebildet ist, über die das Verteileranschlussmodul (1) auf die Profilstange(15) aufrastbar ist.

13. Verteileranschlussmodul nach einem der vorangegangenen Ansprüche, **dadurch gekennzeichnet, dass** die Masseleitungen auf der Leiterplatte (6) zu der die Eingangskontakte (4) tragenden Stirnseite (8) geführt und von außen zugänglich ausgestaltet sind.

14. Verfahren zur Herstellung eines Verteileranschlussmoduls nach Anspruch 1, mittels eines zweiteiligen Gehäuses, umfassend folgende Verfahrensschritte :
a) Einschieben der Leiterplatte in ein erstes Gehäuseteil (21) und
b) Aufrasten eines zweiten, die Eingangskontakte (4) tragenden Gehäuseteils (22) auf das erste Gehäuseteil (21).

15. Verfahren nach Anspruch 14 zur Herstellung eines Verteileranschlussmoduls nach Anspruch 4, **dadurch gekennzeichnet, dass** die Trennkontakte (10) an der vollbestückten Leiterplatte (6) befestigt werden, bevor diese in das erste Gehäuseteil (21) geschoben wird.

16. Verfahren nach Anspruch 14 zur Herstellung eines Verteileranschlussmoduls nach Anspruch 4, umfassend folgende Verfahrensschritte :
a) Einschieben der vollbestückten Leiterplatte (6) in das erste Gehäuseteil (21),
b) Eindrücken der Trennkontakte (10) von der Unterseite des ersten Gehäuseteils (21), so dass die Trennkontakte (10) an der Leiterplatte (6) eingespannt sind und
c) Aufrasten des zweiten, die Eingangskontakte (4) tragenden Gehäuseteils (22) auf das erste Gehäuseteil (21).

17. Verfahren nach Anspruch 14 zur Herstellung eines Verteileranschlussmoduls nach Anspruch 4, umfassend folgende Verfahrenschritte :
a) Einschieben der vollbestückten Leiterplatte (6) in das erste **Gehäuseteil (21),**
b) Aufrasten des zweiten, die Eingangskontakte (4) tragenden Gehäuseteils (22) auf das erste Gehäuseteil (21) und
c) Eindrücken der Trennkontakte (10) von der Unterseite des ersten Gehäuseteils(21), so dass die Trennkontakte (10) an der Leiterplatte (6) eingespannt sind.

## Claims

1. Distribution connection module for telecommunications and data technology, comprising a housing in which input and output contacts for the connection of cables or wires are arranged such that they are externally accessible, wherein
the housing (3) is designed with a cavity in which functional elements are arranged between the input and output contacts (4, 5), wherein
the functional elements are arranged on at least one printed circuit board (6), which is supported in the housing (3), and comprise insulation displacement contacts,
the insulation-displacement contacts are each formed with a contact (9) in the form of a fork, by means of which a force-fitting electrical connection can be produced to electrical contact pads arranged on the printed circuit board (6).

2. Distribution connection module according to one of the preceding claims, **characterized in that** the output contacts (5) are in the form of insulation-displacement contacts or electrical plug connectors.

3. Distribution connection module according to one of the preceding claims, **characterized in that** the functional elements are in the form of overvoltage protection, in particular a coordinated protection circuit.

4. Distribution connection module according to one of the preceding claims, **characterized in that** an isolating contact (10) which is externally accessible is in each case arranged between an input and output contact (4, 5).

5. Distribution connection module according to Claim 4, **characterized in that** the isolating contact (10) is arranged in series with the functional elements.

6. Distribution connection module according to Claim 5, **characterized in that** the isolating contact (10) is arranged behind the functional elements.

7. Distribution connection module according to one of Claims 4 to 6, **characterized in that** the isolating contact (10) is arranged on the underneath of the printed circuit board (6).

8. Distribution connection module according to Claim 7, **characterized in that** the isolating contact (10) is accessible from the side of the input contacts (4).

9. Distribution connection module according to one of the preceding claims, **characterized in that** the input contacts (4) and output contacts (5) are arranged on opposite end faces of the housing (3).

10. Distribution connection module according to one of the preceding claims, **characterized in that** the distances between the insulation-displacement contact elements are dimensioned with respect to one another in such a way that the wires (7) can be connected using standard connecting tools.

11. Distribution connection module according to one of the preceding claims, **characterized in that** the ground lines on the printed circuit board (6) are designed such that they are externally accessible by means of at least one contact (14) in the form of a ring or fork.

12. Distribution connection module according to Claim 11, **characterized in that** the housing (3) is designed with snap-action elements in the area of the contact (14) which is in the form of a fork, via which snap-action elements the distribution connection module (1) can be latched onto the profiled rod (15).

13. Distribution connection module according to one of the preceding claims, **characterized in that** the ground lines on the printed circuit board (6) are routed to the end face (8) on which the input contacts (4) are fitted, and are designed to be externally accessible.

14. Method for producing a distribution connection module according to Claim 1, by means of a two-part housing, comprising the following method steps:
a) insertion of the printed circuit board into a first housing part (21) and
b) latching a second housing part (22), to which the input contacts (4) are fitted, to the first housing part (21).

15. Method according to Claim 14 for producing a distribution connection module according to Claim 4, **characterized in that** the isolating contacts (10) are mounted on the fully populated printed circuit board (6) before the latter is pushed into the first housing part (21).

16. Method according to Claim 14 for producing a distribution connection module according to Claim 4, comprising the following method steps:
a) inserting the fully populated printed circuit board (6) into the first housing part (21),
b) pushing in the isolating contacts (10) from the underneath of the first housing part (21), so that the isolating contacts (10) are clamped in on the printed circuit board (6), and
c) latching the second housing part (22), which is fitted with the input contacts (4), onto the first housing part (21).

17. Method according to Claim 14 for producing a distribution connection module according to Claim 4, comprising the following method steps:
a) inserting the fully populated printed circuit board (6) into the first housing part (21),
b) latching the second housing part (22), which is fitted with the input contacts (4), onto the first housing part (21) and
c) pushing in the isolating contacts (10) from the underneath of the first housing part (21), so that the isolating contacts (10) are clamped in on the printed circuit board (6).

## Revendications

1. Module distributeur à connexions utilisé en télécommunications et dans des systèmes de données, comprenant un boîtier, dans lequel sont disposés des contacts d'entrée et de sortie accessibles de l'extérieur pour la connexion de lignes ou de conducteurs, dans lequel
- le boîtier (3) est formé avec un espace creux, dans lequel
- des éléments fonctionnels sont disposés entre les contacts d'entrée et de sortie (4, 5), dans lequel
- les éléments fonctionnels sont disposés sur au moins une plaquette de circuits imprimés (6), qui est supportée dans le boîtier (3), et
- les contacts d'entrée (4) comprennent des contacts à borne guillotine,
**caractérisé en ce que**
- les contacts à borne guillotine sont chaque fois formés avec un contact en forme de lyre (9), au moyen duquel on établit un raccordement électrique par complémentarité de force avec des pastilles de contact électrique disposées sur la plaquette de circuits imprimés (6).

2. Module distributeur à connexions selon la revendication 1, **caractérisé en ce que** les contacts de sortie (5) sont des contacts à borne guillotine ou des connecteurs électriques.

3. Module distributeur à connexions selon l'une quelconque des revendications précédentes, **caractérisé en ce que** les éléments fonctionnels sont constitués par une protection contre les surtensions, en particulier sous la forme d'un circuit de protection échelonné.

4. Module distributeur à connexions selon l'une quelconque des revendications précédentes, **caractérisé en ce qu'**un contact de coupure (10), qui est accessible de l'extérieur, est chaque fois disposé entre un contact d'entrée et un contact de sortie (4, 5).

5. Module distributeur à connexions selon la revendication 4, **caractérisé en ce que** le contact de coupure (10) est disposé en série avec les éléments fonctionnels.

6. Module distributeur à connexions selon la revendication 5, **caractérisé en ce que** le contact de coupure (10) est disposé après les éléments fonctionnels.

7. Module distributeur à connexions selon l'une quelconque des revendications 4 à 6, **caractérisé en ce que** le contact de coupure (10) est disposé sur la face inférieure de la plaquette de circuits imprimés (6).

8. Module distributeur à connexions selon la revendication 7, **caractérisé en ce que** le contact de coupure (10) est accessible par le côté des contacts d'entrée (4).

9. Module distributeur à connexions selon l'une quelconque des revendications précédentes, **caractérisé en ce que** les contacts d'entrée (4) et les contacts de sortie (5) sont disposés sur des faces frontales opposées du boîtier (3).

10. Module distributeur à connexions selon l'une quelconque des revendications précédentes, **caractérisé en ce que** les distances des éléments de contact à borne guillotine l'un par rapport à l'autre sont dimensionnées de telle manière que les conducteurs (7) puissent être raccordés avec des outils de connexion standard.

11. Module distributeur à connexions selon l'une quelconque des revendications précédentes, **caractérisé en ce que** les lignes de masse sont formées de façon accessible de l'extérieur sur la plaquette de circuits imprimés (6) par au moins un contact (14) en forme d'anneau ou de lyre.

12. Module distributeur à connexions selon la revendication 11, **caractérisé en ce que** le boîtier (3) est formé, dans la région du contact en forme de lyre (14), avec des éléments à déclic, au moyen desquels le module de raccordement à connexions (1) peut être encliqueté sur la barre profilée (15).

13. Module distributeur à connexions selon l'une quelconque des revendications précédentes, **caractérisé en ce que** les lignes de masse sont guidées sur la plaquette de circuits imprimés (6) vers la face frontale (8) portant les contacts d'entrée (4) et sont accessibles de l'extérieur.

14. Procédé pour la fabrication d'un module distributeur à connexions selon la revendication 1, au moyen d'un boîtier en deux parties, comprenant les étapes suivantes:
a) insérer la plaquette de circuits imprimés dans une première partie de boîtier (21), et
b) encliqueter une deuxième partie de boîtier (22), portant les contacts d'entrée (4), sur la première partie de boîtier (21).

15. Procédé selon la revendication 14 pour la fabrication d'un module distributeur à connexions selon la revendication 4, **caractérisé en ce que** l'on fixe les contacts de coupure (10) sur la plaquette de circuits imprimés (6) complètement équipée, avant d'insérer celle-ci dans la première partie de boîtier (21).

16. Procédé selon la revendication 14 pour la fabrication d'un module distributeur à connexions selon la revendication 4, comprenant les étapes suivantes:
a) insérer la plaquette de circuits imprimés (6) complètement équipée dans la première partie de boîtier (21),
b) enfoncer les contacts de coupure (10) par la face inférieure de la première partie de boîtier (21), de telle manière que les contacts de coupure (10) soient encastrés dans la plaquette de circuits imprimés (6), et
c) encliqueter la deuxième partie de boîtier (22), portant les contacts d'entrée (4), sur la première partie de boîtier (21).

17. Procédé selon la revendication 14 pour la fabrication d'un module distributeur à connexions selon la revendication 4, comprenant les étapes suivantes:
a) insérer la plaquette de circuits imprimés (6) complètement équipée dans la première partie de boîtier (21),
b) encliqueter la deuxième partie de boîtier (22), portant les contacts d'entrée (4), sur la première partie de boîtier (21), et
c) enfoncer les contacts de coupure (10) par la face inférieure de la première partie de boîtier (21), de telle manière que les contacts de coupure (10) soient encastrés dans la plaquette de circuits imprimés (6).
